(19) **Europäisches Patentamt**
**European Patent Office**
**Office européen des brevets**

(11) **EP 1 828 741 B1**

(12) **FASCICULE DE BREVET EUROPEEN**

(45) Date de publication et mention
de la délivrance du brevet:
**30.04.2014 Bulletin 2014/18**

(21) Numéro de dépôt: **05816224.9**

(22) Date de dépôt: **08.12.2005**

(51) Int Cl.:
***G01M 11/02*** *(2006.01)*

(86) Numéro de dépôt international:
**PCT/EP2005/056620**

(87) Numéro de publication internationale:
**WO 2006/067050 (29.06.2006 Gazette 2006/26)**

(54) **PROCEDE ET DISPOSTIF DE MESURE SANS CONTACT DE LA COURBURE D'UN OBJET OPHTALMIQUE**

VERFAHREN UND VORRICHTUNG ZUM BERÜHRUNGSLOSEN MESSEN DER KRÜMMUNG EINES OPHTHALMISCHEN GEGENSTANDES

METHOD AND DEVICE FOR CONTACTLESS MEASUREMENT OF THE CURVATURE OF AN OPHTHALMIC OBJECT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.12.2004 FR 0453086**

(43) Date de publication de la demande:
**05.09.2007 Bulletin 2007/36**

(73) Titulaire: **ESSILOR INTERNATIONAL (Compagnie Générale d'Optique) 94227 Charenton (FR)**

(72) Inventeurs:
- **LEVECQ, Xavier**
 **F-94227 Charenton (FR)**

- **CHENE, Sylvain**
 **F-94227 Charenton (FR)**

(74) Mandataire: **Lenne, Laurence et al Feray Lenne Conseil Le Centralis 63, avenue du Général Leclerc 92340 Bourg-la-Reine (FR)**

(56) Documents cités:
**FR-A- 2 788 597 US-A1- 2002 126 293**

- **SRIRAM K V ET AL: "CURVATURE AND FOCAL LENGTH MEASUREMENTS USING COMPENSATION OF A COLLIMATED BEAM" OPTICS AND LASER TECHNOLOGY, ELSEVIER SCIENCE PUBLISHERS BV., AMSTERDAM, NL, vol. 23, no. 4, 1 août 1991 (1991-08-01), pages 241-245, XP000262906 ISSN: 0030-3992**

**Description**

L'invention concerne un procédé et un dispositif de mesure sans contact de la courbure d'un objet ophtalmique.

Elle se rapporte plus précisément à une lentille ophtalmique. Par lentille est ici entendue une lentille finie pourvue de traitements de type antireflet et autres et prête à être positionnée sur une monture ou une lentille semi-finie ou ébauche de lentille, c'est-à-dire destinée à subir au moins un traitement, par exemple de surfaçage, pour être utilisable. Une lentille semi-finie comporte une face avant finie adaptée à la correction de la vue et une face arrière brute qui doit être traitée ultérieurement.

Des procédés de mesure de courbure avec contact, du type optique ou mécanique, sont connus. Compte tenu du contact, ils ont pour inconvénient d'entraîner des dégradations, essentiellement des rayures, de l'objet.

Il est également connu de mesurer la courbure d'un objet, sans contact et par interférométrie. Un tel procédé est de mise en oeuvre complexe car il nécessite un positionnement relatif de l'objet très précis et un fonctionnement en lumière monochromatique. De plus, avec ce procédé, une étape de mesure est relativement longue.

L'invention a pour objet un procédé et un dispositif de mesure de la courbure de cette face avant permettant de déterminer aisément et rapidement cette caractéristique essentielle de la lentille et permettant par exemple son classement en fonction de cette courbure, sans risque d'erreur. De plus, le procédé conforme à l'invention ne nécessite pas de contrainte de positionnement relatif de l'objet importante. Par ailleurs, cette mesure est effectuée sans contact susceptible d'abîmer la surface avant de l'objet ophtalmique.

Pour ce faire, l'invention propose un procédé de mesure sans contact de la courbure d'un objet ophtalmique comportant une face dite avant présentant ladite courbure, caractérisé en ce qu'il consiste à :

- émettre séquentiellement au moins deux faisceaux de lumière sur ladite face avant, ces deux faisceaux étant décalés d'un certain angle ($\alpha$) et convergeant sensiblement sur ladite face avant, l'un desdits faisceaux de lumière émis étant sensiblement centré sur ladite face avant et sensiblement normal à ladite face avant,
- analyser le front d'ondes des faisceaux réfléchis résultants, afin d'en déterminer leur foyer respectif,
- déduire le rayon de courbure de ladite face,

Selon un mode de réalisation préféré, ledit objet est fixe.

De préférence, la longueur d'ondes desdits faisceaux optiques est choisie de telle sorte que ces faisceaux sont sensiblement absorbés par le matériau de l'objet.

Dans le cas où ledit objet est en matière organique, lesdits faisceaux de lumière émis sont de préférence des faisceaux UV.

L'invention concerne également un dispositif de mesure pour la mise en oeuvre du procédé comme précisé ci-dessus, caractérisé en ce qu'il comporte deux sources de lumière destinées à envoyer lesdits faisceaux de lumière et un dispositif analyseur de front d'ondes destiné à analyser les faisceaux réfléchis résultants.

De préférence, lesdites sources de lumière sont sensiblement ponctuelles.

Avantageusement, lesdites sources sont fixes.

L'invention est décrite ci-après plus en détail à l'aide de figures ne représentant qu'un mode de réalisation préféré de l'invention.

La figure 1 est une figure illustrant le procédé conforme à l'invention.

La figure 2 est une vue de face d'un dispositif de mesure conforme à l'invention.

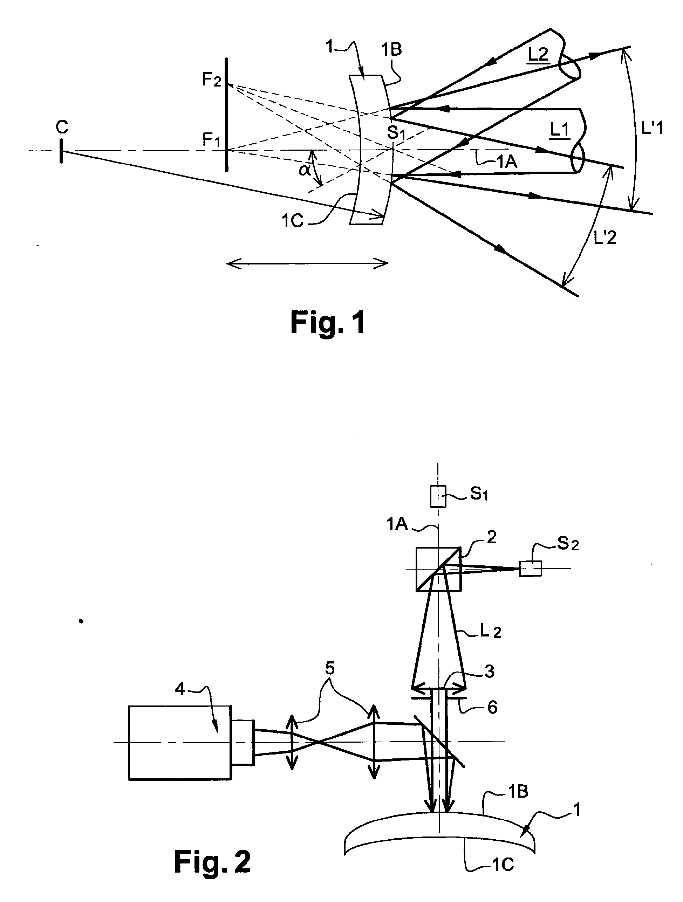

Le procédé de mesure sans contact de la courbure d'un objet ophtalmique présentant un axe normal 1A, en particulier d'une lentille ophtalmique 1, sphérique ou asphérique, comportant une face avant 1 B présentant cette courbure est illustré sur la figure 1.

Ce procédé consiste à :

- émettre séquentiellement deux faisceaux de lumière $L_1$, $L_2$ sur la face avant 1 B de l'objet fixe, ces deux faisceaux étant décalés d'un certain angle $\alpha$ et convergeant sensiblement sur la face 1 B, l'un desdits faisceaux de lumière émis $L_1$ étant sensiblement centré sur la face avant et sensiblement normal à celle-ci,
- analyser le front d'ondes des faisceaux réfléchis résultants $L'_1$, $L'_2$ afin d'en déterminer le foyer respectif $F_1$, $F_2$.

Selon une caractéristique essentielle de l'invention, ces opérations sont effectuées de telle façon que les faisceaux émis $L_1$, $L_2$ ne sont sensiblement pas réfléchis par la face arrière 1C de la lentille 1.

Pour ce faire, de préférence, la longueur d'ondes des faisceaux de lumière émis $L_1$, $L_2$ est choisie de telle sorte que ces faisceaux sont sensiblement absorbés par le matériau de la lentille 1.

Dans le cas d'une lentille en matière organique, ces faisceaux de lumière émis sont des faisceaux UV.

Alternativement, un cache absorbant peut être disposé sur cette face arrière. Cette face arrière peut également être dépolie.

L'analyse du front d'ondes des faisceaux réfléchis résultants $L'_1$, $L'_2$ permettant de déterminer leur foyer respectif $F_1$, $F_2$ est effectuée de façon connue, par exemple à l'aide d'un dispositif d'analyse décrit dans le document de brevet FR 2 788 597, qui s'inspire d'une analyse de type Shack-Hartmann pour calculer un paramètre caractérisant la courbure moyenne d'un front d'onde.

Le rayon de courbure R de la face avant 1 B est alors déduit par la formule calculée :

$$R = 2 \times F_1 F_2 / \text{tangente} (\alpha).$$

Il est à noter que le procédé conforme à l'invention permet également de déterminer la position de la surface avant par rapport au plan pupillaire virtuel du dispositif de mesure. Ceci permet éventuellement de déterminer la distance de l'objet ophtalmique et de ce dispositif de mesure. Cette autre détermination peut être utilisée par exemple pour déterminer l'épaisseur de l'objet ophtalmique.

Un dispositif de mesure pour la mise en oeuvre de ce procédé est représenté sur la figure 2.

Ce dispositif comprend deux sources de lumière $S_1$, $S_2$ fixes destinées à émettre les faisceaux de lumière. Une première source $S_1$ est disposée sur l'axe optique 1 A de la lentille 1 et émet un premier faisceau optique $L_1$ non représenté sur cette figure et parallèle à cet axe optique.

Une seconde source de lumière $S_2$ est disposée latéralement à un élément réfléchissant 2, afin d'émettre un second faisceau de lumière $L_2$ décalé d'un certain angle par rapport au premier faisceau et convergeant sensiblement sur la face avant 1 B de la lentille 1 avec ce premier faisceau.

Un dispositif de collimation 3, par exemple une lentille de collimation, est avantageusement disposé sur la trajectoire commune de ces deux faisceaux et un diaphragme 6 limite la section de ces faisceaux à une surface relativement petite. Il est placé à proximité du dispositif de collimation 3 en aval de la trajectoire des faisceaux de lumière.

Transversalement à ces faisceaux, est disposé un système optronique 4 d'analyse des fronts d'ondes réfléchies tel que le système décrit dans le document de brevet FR 2 788 597. Ce système 4 assure par l'intermédiaire de systèmes de reprise d'image 5, dont un filtre, la détermination du foyer respectif des deux faisceaux réfléchis résultant des deux faisceaux émis $L_1$, $L_2$.

Le dispositif comporte également une unité de calcul déduisant le rayon de courbure de la face avant 1 B de la lentille 1. Cette unité de calcul peut être liée une base de données de rayons de courbure permettant par comparaison la classification de la lentille.

Selon un mode de réalisation préféré, le dispositif est destiné à la mesure du rayon de courbure de lentille en matière organique et les sources de lumière sont des diodes électroluminescentes UV.

A titre d'exemple de réalisation pratique, le diamètre du faisceau collimaté par le dispositif de collimation 3 est compris entre 4 et 5 mm ; le diamètre du faisceau analysé par le dispositif d'analyse 4 est d'environ 3,6 mm dans un plan parallèle au plan pupillaire virtuel du dispositif de mesure et disposé de préférence à moins de 10 mm de la lentille. Le temps de mesure peut être inférieur à 2 s.

Bien que décrit dans le cadre de mesure de courbure de la face avant d'une lentille finie ou semi-finie, le procédé conforme à l'invention peut être utilisé pour tout objet ophtalmique, comme par exemple un moule ophtalmique, en verre ou en métal, et quelle que soit la matière de cet objet, organique ou minérale, afin de mesurer le rayon de courbure d'une de ses faces.

Il peut être utilisé pour la mesure de la courbure d'une lentille unifocale comme décrit ci-dessus, mais aussi d'une lentille bifocale ou trifocale. Dans ce cas, la mesure est effectuée sur la pastille ou les deux pastilles de focalisation correspondantes disposées sur la lentille telle que décrite ci-dessus.

Le procédé conforme à l'invention peut être appliqué également à la mesure de la courbure d'une lentille progressive.

Il peut être utilisé, selon le même principe, pour mesurer la courbure d'une face convexe, comme décrit ci-dessus, ou d'une face concave.

**Revendications**

1. Procédé de mesure sans contact de la courbure d'un objet ophtalmique (1) comportant une face dite avant (1 B) présentant ladite courbure, **caractérisé en ce qu'**il consiste à :

   - émettre séquentiellement au moins deux faisceaux de lumière ($L_1$, $L_2$) sur ladite face avant, ces deux faisceaux étant décalés d'un certain angle ($\alpha$) et convergeant sensiblement sur ladite face avant, l'un desdits faisceaux de lumière émis ($L_1$) étant sensiblement centré sur ladite face avant et sensiblement normal à ladite face avant,
   - analyser le front d'ondes des faisceaux réfléchis résultants ($L'_1$, $L'_2$), ' afin d'en déterminer leur foyer respectif ($F_1$, $F_2$),
   - déduire le rayon de courbure de ladite face,

   ces opérations étant effectuées de telle façon que lesdits faisceaux émis ne sont sensiblement pas réfléchis par la face arrière dudit objet.

2. Procédé de mesure selon la revendication 1, **caractérisé en ce que** ledit objet (1) est fixe.

3. Procédé de mesure selon la revendication 1 ou 2, **caractérisé en ce que** la longueur d'ondes desdits faisceaux optiques ($L_1$, $L_2$) est choisie de telle sorte que ces faisceaux sont sensiblement absorbés par le matériau de l'objet (1).

4. Procédé selon l'une des revendications précédentes, destiné à un objet en matière organique, **carac-**

**térisé en ce que** lesdits faisceaux de lumière émis ($L_1$, $L_2$) sont des faisceaux UV.

5. Dispositif de mesure adapté pour la mise en oeuvre du procédé selon l'une des revendications précédentes, **caractérisé en ce qu'**il comporte deux sources de lumière ($S_1$, $S_2$) destinées à émettre lesdits faisceaux de lumière ($L_1$, $L_2$), un dispositif analyseur (4) de front d'ondes destiné à analyser les faisceaux réfléchis résultants ($L'_1$, $L'_2$) et une unité de calcul adaptée pour déduire le rayon de courbure de la face avant de l'objet.

6. Dispositif selon la revendication 5, **caractérisé en ce que** lesdites sources de lumière ($S_1$, $S_2$) sont sensiblement ponctuelles.

7. Dispositif selon la revendication 5 ou 6, **caractérisé en ce que** lesdites sources sont fixes.

**Patentansprüche**

1. Verfahren zur kontaktlosen Messung der Krümmung eines ophthalmischen Gegenstands (1), der eine so genannte vordere Fläche (1B) aufweist, die die Krümmung aufweist, **dadurch gekennzeichnet, dass** es darin besteht:

   - nacheinander wenigstens zwei Lichtstrahlenbündel ($L_1$, $L_2$) zu der vorderen Fläche auszusenden, wobei diese zwei Strahlenbündel um einen bestimmten Winkel ($\alpha$) versetzt sind und auf der vorderen Fläche im Wesentlichen konvergieren, wobei eines der ausgesendeten Lichtstrahlenbündel ($L_1$) auf der vorderen Fläche im Wesentlichen zentriert und zu der vorderen Fläche im Wesentlichen senkrecht ist,
   - die Wellenfronten der resultierenden reflektierten Strahlenbündel ($L'_1$, $L'_2$) zu analysieren, um ihren jeweiligen Brennpunkt ($F_1$, $F_2$) zu bestimmen,
   - den Krümmungsradius der Fläche abzuleiten,

   wobei diese Operationen in der Weise ausgeführt werden, dass die ausgesendeten Strahlenbündel von der hinteren Fläche des Gegenstands im Wesentlichen nicht reflektiert werden.

2. Messverfahren nach Anspruch 1, **dadurch gekennzeichnet, dass** der Gegenstand (1) fest ist.

3. Messverfahren nach Anspruch 1 oder 2, **dadurch gekennzeichnet, dass** die Wellenlänge der Lichtstrahlenbündel ($L_1$, $L_2$) in der Weise gewählt ist, dass die Strahlenbündel von dem Material des Gegenstands (1) im Wesentlichen absorbiert werden.

4. Verfahren nach einem der vorhergehenden Ansprüche, das für einen Gegenstand aus organischem Material bestimmt ist, **dadurch gekennzeichnet, dass** die ausgesendeten Lichtstrahlenbündel ($L_1$, $L_2$) UV-Strahlenbündel sind.

5. Messvorrichtung, die dafür ausgelegt ist, das Verfahren nach einem der vorhergehenden Ansprüche auszuführen, **dadurch gekennzeichnet, dass** sie zwei Lichtquellen ($S_1$, $S_2$), die dazu bestimmt sind, die Lichtstrahlenbündel ($L_1$, $L_2$) auszusenden, eine Vorrichtung (4) zum Analysieren von Wellenfronten, die dazu bestimmt ist, die resultierenden reflektierten Strahlenbündel ($L'_1$, $L'_2$) zu analysieren, und eine Recheneinheit, die dafür ausgelegt ist, den Krümmungsradius der vorderen Fläche des Gegenstands abzuleiten, umfasst.

6. Vorrichtung nach Anspruch 5, **dadurch gekennzeichnet, dass** die Lichtquellen ($S_1$, $S_2$) im Wesentlichen punktförmig sind.

7. Vorrichtung nach Anspruch 5 oder 6, **dadurch gekennzeichnet, dass** die Quellen fest sind.

**Claims**

1. Method for measuring without contact the curvature of an ophthalmic object (1) comprising what is called a front face (1B) having said curvature, **characterised in that** it consists in:

   - emitting, sequentially, at least two light beams ($L_1$, $L_2$) onto said front face, these two beams being offset by a certain angle ($\alpha$) and converging substantially on said front face, one of said emitted light beams ($L_1$) being substantially centred on said front face and substantially normal to said front face;
   - analysing the wavefronts of the resulting reflected beams ($L'_1$, $L'_2$), in order to determine therefrom their respective focal points ($F_1$, $F_2$); and
   - deducing the radius of curvature of said face,

   these operations being carried out in such a way that said emitted beams are substantially not reflected by the back face of said object.

2. Measuring method according to Claim 1, **characterised in that** said object (1) is fixed.

3. Measuring method according to either of Claims 1 and 2, **characterised in that** the wavelength of said optical beams ($L_1$, $L_2$) is chosen such that these beams are substantially absorbed by the material of the object (1).

4. Method according to one of the preceding claims, intended for an object made of an organic material, **characterised in that** said emitted light beams ($L_1$, $L_2$) are UV beams.

5. Measuring device suitable for implementing the method according to one of the preceding claims, **characterised in that** it comprises two light sources ($S_1$, $S_2$) intended to emit said light beams ($L_1$, $L_2$), a wavefront-analysing device (4) intended for analysing the resulting reflected beams ($L'_1$, $L'_2$), and a calculational unit suitable for deducing the radius of curvature of the front face of the object.

6. Device according to Claim 5, **characterised in that** said light sources ($S_1$, $S_2$) are substantially point sources.

7. Device according to either of Claims 5 and 6, **characterised in that** said sources are fixed.

**Fig. 1**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2788597